(19) Europäisches Patentamt
European Patent Office
Office européen des brevets

(11) EP 4 737 039 A1

(12) EUROPEAN PATENT APPLICATION

(43) Date of publication:
06.05.2026 Bulletin 2026/19

(21) Application number: 25212041.5

(22) Date of filing: 29.10.2025

(51) International Patent Classification (IPC):
B23F 1/02 (2006.01)    B23F 5/04 (2006.01)

(52) Cooperative Patent Classification (CPC):
B23F 1/023; B23F 5/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.10.2024 JP 2024191091

(71) Applicant: Nidec Machine Tool Corporation
Ritto-shi, Shiga 520-3080 (JP)

(72) Inventor: YANASE, Yoshikoto
Ritto, Shiga, 520-3080 (JP)

(74) Representative: Viering, Jentschura & Partner
mbB
Patent- und Rechtsanwälte
Grillparzerstraße 14
81675 München (DE)

(54) **GEAR GRINDER AND GEAR GRINDING METHOD**

(57)    A gear grinder (1) includes a workpiece rotation mechanism (10), a grinding wheel rotation mechanism (30), and a first movement mechanism (41). The workpiece rotation mechanism (10) rotates a workpiece (9) having a plurality of teeth (91) on an outer peripheral surface about a workpiece axis (X1) which is a central axis thereof. The grinding wheel rotation mechanism (30) rotates a grinding wheel (20) having threads (21) on an outer peripheral surface about a grinding wheel axis which is a central axis thereof. The first movement mechanism (41) moves the grinding wheel (20) from one end to the other end of the workpiece (9) in the tooth width direction. The gear grinder (1) grinds the workpiece (9) by synchronously rotating the workpiece (9) and the grinding wheel (20) while the workpiece (9) and the grinding wheel (20) mesh with each other and moving the grinding wheel (20) by the first movement mechanism (41). The workpiece (9) includes a first region located at a center portion in the tooth width direction and a second region closer to an end portion in the tooth width direction than the first region. The movement speed (AF) of the grinding wheel (20) in the tooth width direction when grinding the first region is lower than the movement speed (AF) of the grinding wheel (20) in the tooth width direction when grinding the second region.

FIG. 1

EP 4 737 039 A1

## Description

Technical Field

The present invention relates to a gear grinder and a gear grinding method.

Background Art

Conventionally, a gear grinder that grinds a workpiece serving as a gear is known. A gear grinder synchronously rotates a workpiece having teeth and a grinding wheel having threads, and brings the workpiece and the grinding wheel into contact with each other such that the groove of the grinding wheel meshes with the teeth of the workpiece. Then, by moving the contact point between the workpiece and the grinding wheel in the tooth width direction, the tooth of the workpiece is ground from one end to the other end in the tooth width direction.

A conventional gear grinder is described, for example, in Patent Literature 1.
Patent Literature 1: JP 2016-083748 A

Summary of Invention

Technical Problem

Feed marks (tool marks) are generated on the surface of the tooth ground by the gear grinder. The feed mark is minute undulations formed on the surface of the tooth by the grinding wheel. The feed mark is periodically formed at a pitch corresponding to the movement speed of the grinding wheel. When the gears are meshed, noise may occur due to the feed mark. Specifically, in addition to noise having a frequency corresponding to the number of teeth of the gear, noise having a frequency corresponding to the pitch of the feed marks may occur.

Therefore, an object of the present invention is to provide a gear grinder and a gear grinding method capable of reducing noise caused by feed marks.

Solution to Problem

A first invention provides a gear grinder for grinding a workpiece serving as a gear, the gear grinder including: a workpiece rotation mechanism that rotates a workpiece having a plurality of teeth on an outer peripheral surface about a workpiece axis that is a central axis of the workpiece; a grinding wheel rotation mechanism that rotates a grinding wheel having threads on an outer peripheral surface about a grinding wheel axis which is a central axis of the grinding wheel; and a first movement mechanism that moves the grinding wheel from one end to the other end of the workpiece in a tooth width direction parallel to the workpiece axis, in which the workpiece rotation mechanism and the grinding wheel rotation mechanism synchronously rotate the workpiece and the grinding wheel in a state where the workpiece and the grinding wheel mesh with each other, and the first movement mechanism moves the grinding wheel to grind the workpiece, the workpiece includes: a first region located at a center portion in the tooth width direction; and a second region closer to an end portion in the tooth width direction than the first region, and a movement speed of the grinding wheel in the tooth width direction when grinding the first region is lower than a movement speed of the grinding wheel in the tooth width direction when grinding the second region.

A second invention provides a gear grinding method for grinding a workpiece serving as a gear, the gear grinding method including: a step of grinding a workpiece by rotating a workpiece having a plurality of teeth on an outer peripheral surface thereof about a workpiece axis that is a central axis thereof, meshing a grinding wheel having threads on an outer peripheral surface thereof with the workpiece while rotating the grinding wheel about a grinding wheel axis which is a central axis thereof, and moving the grinding wheel from one end to an other end of the workpiece in a tooth width direction parallel to the workpiece axis, in which the workpiece includes: a first region located at a center portion in the tooth width direction; and a second region closer to an end portion in the tooth width direction than the first region, and a movement speed of the grinding wheel in the tooth width direction when grinding the first region is lower than a movement speed of the grinding wheel in the tooth width direction when grinding the second region.

Advantageous Effects of Invention

According to the first invention and the second invention, the pitch of the feed mark formed on the surface of the tooth by the grinding wheel can be made different between the first region and the second region. Accordingly, it is possible to reduce noise caused by the feed mark at the time of meshing the gear. In addition, noise perceived by a person can be reduced by increasing the frequency of noise generated from the first region that meshes relatively strongly.

Brief Description of Drawings

Fig. 1 is a diagram illustrating a configuration of a gear grinder.
Fig. 2 is a flowchart illustrating a flow of an operation of the gear grinder.
Fig. 3 is a diagram illustrating a state of a workpiece and a grinding wheel in step S5.
Fig. 4 is a diagram illustrating a state of a workpiece and a grinding wheel in step S5.
Fig. 5 is a diagram illustrating a state of the workpiece and the grinding wheel in step S5.
Fig. 6 is a graph illustrating a change in a movement speed of a grinding wheel.

Fig. 7 is a graph illustrating a noise analysis result when a workpiece is ground while a grinding wheel is moved at a constant movement speed.

Fig. 8 is a graph illustrating a noise analysis result when a workpiece is ground while a movement speed of a grinding wheel is changed.

Description of Embodiments

<1. Configuration of gear grinder>

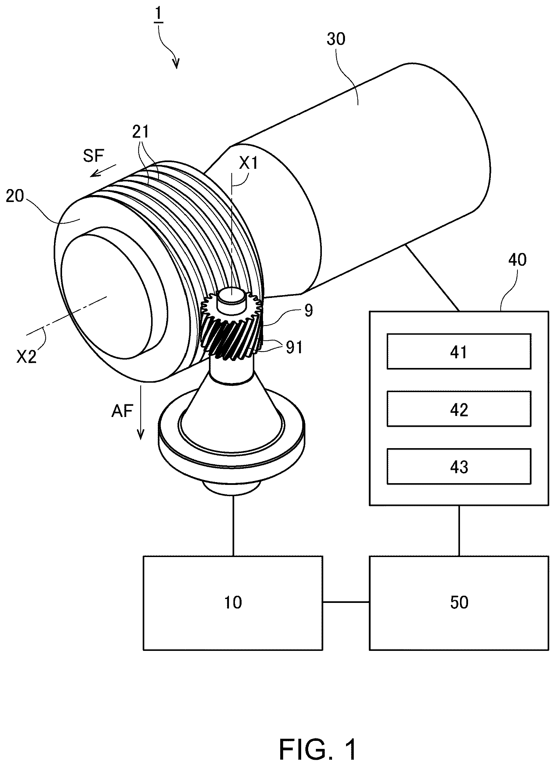

Fig. 1 is a diagram illustrating a configuration of a gear grinder 1 according to an embodiment. The gear grinder 1 is a machine tool that grinds a workpiece 9 serving as a gear.

The workpiece 9 has a substantially cylindrical shape, and has a plurality of teeth 91 on an outer peripheral surface thereof. Hereinafter, the central axis of the workpiece 9 is referred to as a "workpiece axis X1". A direction parallel to the workpiece axis X1 is referred to as a "tooth width direction". The gear manufactured by grinding the workpiece 9 is, for example, a helical gear. The workpiece 9 serving as a helical gear has the spiral teeth 91 centered on the workpiece axis X1. However, the gear manufactured by grinding the workpiece 9 may be another gear such as a spur gear.

As illustrated in Fig. 1, the gear grinder 1 includes a workpiece rotation mechanism 10, a grinding wheel 20, a grinding wheel rotation mechanism 30, a movement mechanism 40, and a control unit 50. The workpiece rotation mechanism 10, the grinding wheel rotation mechanism 30, and the movement mechanism 40 are installed on a common bed (not illustrated).

The workpiece rotation mechanism 10 is a mechanism that rotates the workpiece 9 about the workpiece axis X1. The workpiece rotation mechanism 10 includes a pair of clampers that hold the workpiece 9 and a motor that rotates the clampers. In the present embodiment, the workpiece 9 rotates while being held in a posture in which the workpiece axis X1 faces the vertical direction. However, the direction of the workpiece axis X1 is not necessarily the vertical direction.

The grinding wheel 20 is a tool for grinding the teeth 91 of the workpiece 9. The grinding wheel 20 has a substantially cylindrical shape, and has threads 21 on an outer peripheral surface thereof. Hereinafter, the central axis of the grinding wheel 20 is referred to as a "grinding wheel axis X2". A direction parallel to the grinding wheel axis X2 is referred to as a "shift direction".

The grinding wheel rotation mechanism 30 is a mechanism that rotates the grinding wheel 20 about the grinding wheel axis X2. The grinding wheel rotation mechanism 30 includes a tool head that holds the grinding wheel 20 and a motor that rotates the tool head. In the present embodiment, the grinding wheel 20 rotates while being held in a posture in which the grinding wheel axis X2 is disposed horizontally.

The movement mechanism 40 is a mechanism that moves the grinding wheel 20 with respect to the workpiece 9. The movement mechanism 40 moves the entire grinding wheel 20 and the grinding wheel rotation mechanism 30. The movement mechanism 40 includes a first movement mechanism 41, a second movement mechanism 42, and a third movement mechanism 43. The first movement mechanism 41 moves the grinding wheel 20 from one end to the other end of the workpiece 9 in the tooth width direction. The second movement mechanism 42 moves the grinding wheel 20 in the shift direction with respect to the workpiece 9. The third movement mechanism 43 moves the grinding wheel 20 toward and away from the workpiece 9.

The first movement mechanism 41, the second movement mechanism 42, and the third movement mechanism 43 are realized by, for example, a motor and a ball screw that converts rotation of the motor into linear motion. By the first movement mechanism 41, the second movement mechanism 42, and the third movement mechanism 43, the movement mechanism 40 can move the grinding wheel 20 in an arbitrary direction in the three-dimensional space with respect to the workpiece 9.

The movement mechanism 40 may include a fourth movement mechanism that adjusts an swivel angle of the grinding wheel axis X2 with respect to the workpiece axis X1.

The control unit 50 is a unit that controls the operation of each portion of the gear grinder 1. The control unit 50 is configured with, for example, a computer having a processor such as a CPU, a memory such as a RAM, and a storage unit such as a hard disk. The storage unit stores a computer program for controlling the operation of the gear grinder 1.

In addition, the control unit 50 is communicably connected to the workpiece rotation mechanism 10, the grinding wheel rotation mechanism 30, and the movement mechanism 40 described above. The control unit 50 controls the operation of these units in accordance with the computer program described above. As a result, the grinding processing of the workpiece 9 in the gear grinder 1 proceeds.

<2. Grinding method>

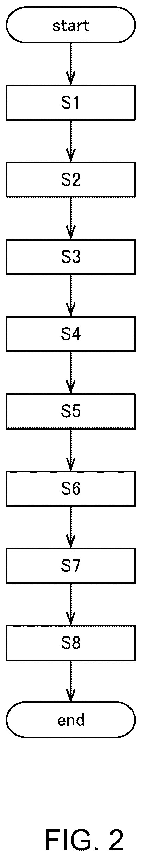

Next, a method of grinding the workpiece 9 to be a gear by the gear grinder 1 will be described. Fig. 2 is a flowchart illustrating a flow of an operation of the gear grinder 1.

When grinding the workpiece 9, first, the user inputs machining conditions to the control unit 50 (step S1). The user inputs machining conditions to the control unit 50 via an input device such as a keyboard or a mouse. The machining conditions include, for example, conditions related to the rotation speed of the workpiece 9, the rotation speed of the grinding wheel 20, and the movement of the grinding wheel 20 by the first movement mechanism 41. However, the machining condition may include other conditions.

Next, the workpiece 9 is set in the gear grinder 1 (step S2). The workpiece 9 is held by a pair of clampers of the workpiece rotation mechanism 10. Thereafter, the workpiece rotation mechanism 10 starts the rotation of the workpiece 9 about the workpiece axis X1 (step S3). In addition, the grinding wheel rotation mechanism 30 starts the rotation of the grinding wheel 20 about the grinding wheel axis X2 (step S4). When the plurality of workpieces 9 are continuously ground, the rotation of the grinding wheel 20 is not stopped for each workpiece 9. In this case, when grinding the second and subsequent workpieces 9, the already rotating grinding wheel 20 is continuously rotated in step S4.

The control unit 50 controls the workpiece rotation mechanism 10 and the grinding wheel rotation mechanism 30 so that the workpiece 9 and the grinding wheel 20 rotate synchronously. The synchronous rotation means that the workpiece 9 and the grinding wheel 20 rotate in a phase capable of meshing with each other. The control unit 50 causes the workpiece 9 and the grinding wheel 20 to rotate synchronously by the workpiece rotation mechanism 10 and the grinding wheel rotation mechanism 30 in a state where the workpiece 9 and the grinding wheel 20 mesh with each other by bringing the grinding wheel 20 close to the workpiece 9. Then, the control unit 50 moves the grinding wheel 20 with respect to the workpiece 9 by the first movement mechanism 41 (step S5).

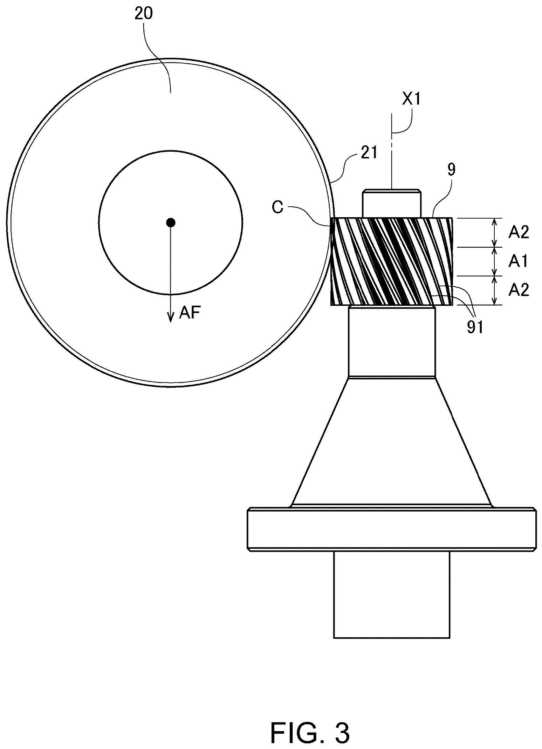

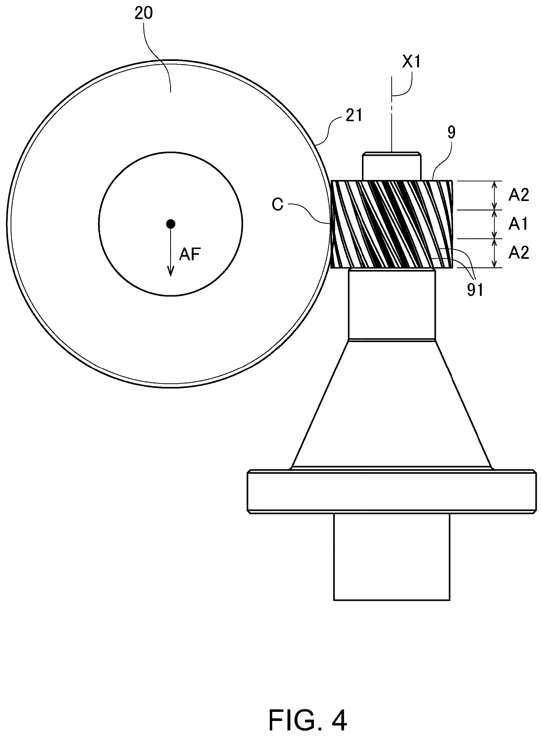

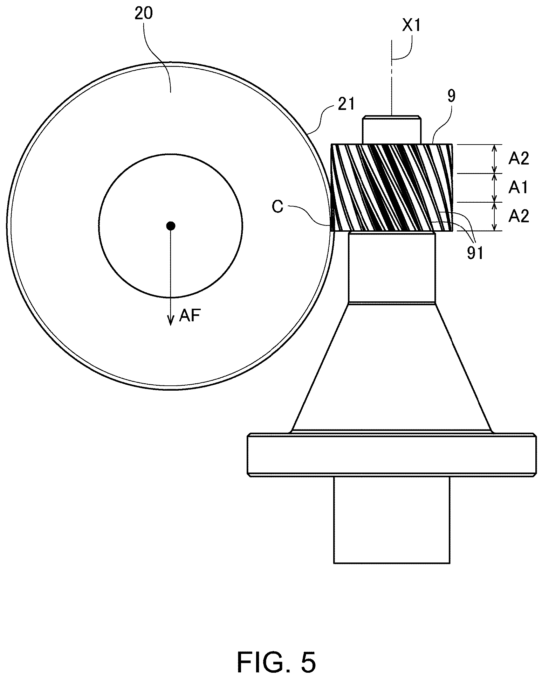

Figs. 3, 4, and 5 are diagrams illustrating states of the workpiece 9 and the grinding wheel 20 in step S5. As illustrated in Figs. 3, 4, and 5, the movement mechanism 40 moves the grinding wheel 20 from one end to the other end of the workpiece 9 in the tooth width direction. More specifically, the movement mechanism 40 moves the grinding wheel 20 such that a contact point C between the workpiece 9 and the grinding wheel 20 moves from one end to the other end of the workpiece 9 in the tooth width direction. At this time, the moving direction of the grinding wheel 20 may be the tooth width direction, or may be a direction slightly inclined with respect to the tooth width direction. That is, the moving direction of the grinding wheel 20 may be a direction including a component in the tooth width direction.

At the contact point C between the workpiece 9 and the grinding wheel 20, the teeth 91 of the workpiece 9 and the groove 21 of the grinding wheel 20 come into sliding contact with each other at a sliding speed corresponding to the rotation speed. As a result, the surface of the teeth 91 of the workpiece 9 is ground. As the contact point C moves in the tooth width direction, the teeth 91 of the workpiece 9 are ground from one end to the other end in the tooth width direction.

At this time, a feed mark (tool mark) is formed on the surface of the teeth 91 of the workpiece 9. The feed mark is minute undulations formed on the surface of the teeth 91 by the grinding wheel 20. The feed mark is periodically formed at a pitch corresponding to the movement speed AF of the grinding wheel 20. In a case where the pitch of the feed mark is constant, noise having a frequency corresponding to the pitch of the feed mark occurs at the time of meshing of the gear. Therefore, the first movement mechanism 41 changes the movement speed AF of the grinding wheel 20 while moving the grinding wheel 20 from one end to the other end of the workpiece 9. As a result, the pitch of the feed mark generated in the teeth 91 of the workpiece 9 is changed.

As illustrated in Figs. 3, 4, and 5, the workpiece 9 has a first region A1 and a pair of second regions A2. The first region A1 is a region located at the center of the workpiece 9 in the tooth width direction. The second region A2 is a region closer to the end portion of the workpiece 9 in the tooth width direction than the first region A1. One of the pair of the second regions A2 is located between the first region A1 and one end of the workpiece 9 in the tooth width direction. The other one of the pair of second regions A2 is located between the first region A1 and the other end of the workpiece 9 in the tooth width direction.

The first movement mechanism 41 makes the movement speed AF of the grinding wheel 20 in the tooth width direction when grinding the first region A1 slower than the movement speed AF of the grinding wheel 20 in the tooth width direction when grinding the second region A2. In this way, the pitch of the feed mark formed on the surface of the teeth 91 by the grinding wheel 20 can be made different between the first region A1 and the second region A2. As a result, the frequency of the noise generated when the gears mesh with each other can be made different between the first region A1 and the second region A2. Therefore, it is possible to suppress an increase in noise of the gear at a specific frequency. As a result, noise caused by the feed mark can be reduced.

When the gears mesh with each other, the gears mesh more strongly in the first region A1, which is the central portion in the tooth width direction, than in the second region A2. Therefore, the noise generated from the first region A1 tends to be larger than the noise generated from the second region A2. Therefore, in the present embodiment, the movement speed AF of the grinding wheel 20 when grinding the first region A1 is made smaller than the movement speed AF of the grinding wheel 20 when grinding the second region A2. In this way, the pitch of the feed marks generated in the first region A1 is smaller than the pitch of the feed marks generated in the second region A2. The height of the feed mark generated in the first region A1 is lower than the height of the feed mark generated in the second region A2. As a result, the frequency of relatively large noise generated from the first region A1 increases. As a result, noise perceived by a person can be reduced.

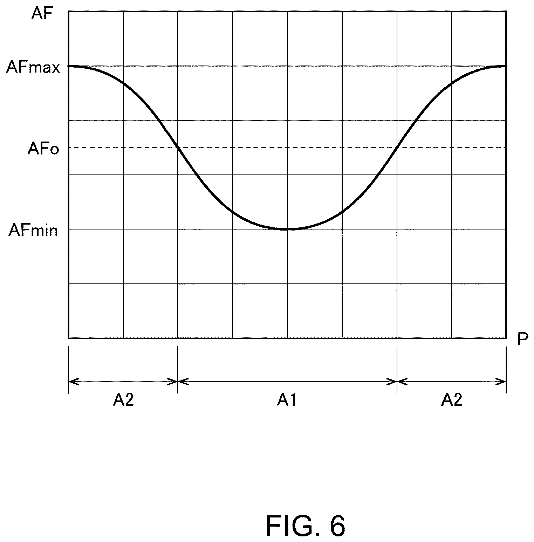

Fig. 6 is a graph illustrating a change in the movement speed AF of the grinding wheel 20. The horizontal axis in Fig. 6 indicates the position P of the contact point C in the tooth width direction. The vertical axis in Fig. 6 indicates the movement speed AF of the grinding wheel

20 in the tooth width direction. In the present embodiment, the first movement mechanism 41 gradually changes the movement speed AF of the grinding wheel 20 in the tooth width direction between the first region A1 and the second region A2. That is, the first movement mechanism 41 continuously changes the movement speed of the grinding wheel 20 instead of stepwise. As a result, it is possible to smoothly change the pitch of the feed mark generated on the teeth 91 of the workpiece 9.

In particular, in the example of Fig. 6, the first movement mechanism 41 changes the movement speed AF of the grinding wheel 20 in the tooth width direction in a sinusoidal shape. In this way, the feed marks can be formed at equal pitches in the two second regions A2. In addition, the pitch change rate of the feed mark can be smoothly changed. Therefore, noise at the time of gear meshing can be further reduced.

The control unit 50 calculates how to change the movement speed AF of the grinding wheel 20 based on the machining condition input by the user to the control unit 50 in step S1. For example, the user inputs a reference value AFo of the movement speed AF and a change rate h of the movement speed AF to the control unit 50. Then, the control unit 50 calculates a maximum value AFmax and a minimum value AFmin of the movement speed AF according to the following calculation Expressions (1) and (2), for example.

$$AFmax = AFo \times (1 + h) \quad (1)$$

$$AFmin = AFo \times (1 - h) \quad (2)$$

The change rate h is, for example, a value larger than 0 and 0.9 or less. In this case, the maximum value AFmax of the movement speed AF of the grinding wheel 20 in the tooth width direction is larger than 1 time and 20 times or less the minimum value AFmin of the movement speed AF of the grinding wheel 20 in the tooth width direction. Accordingly, it is possible to more appropriately reduce the noise caused by the feed mark at the time of meshing the gear.

The maximum value AFmax of the movement speed AF of the grinding wheel 20 in the tooth width direction is more desirably 1.5 times or more and 10 times or less the minimum value AFmin of the movement speed AF of the grinding wheel 20 in the tooth width direction. Further, the maximum value AFmax of the movement speed AF of the grinding wheel 20 in the tooth width direction is more desirably 2 times or more and 5 times or less the minimum value AFmin of the movement speed AF of the grinding wheel 20 in the tooth width direction. Accordingly, it is possible to more appropriately reduce the noise caused by the feed mark at the time of meshing the gear.

In the present embodiment, while the grinding wheel 20 moves once from one end to the other end of the workpiece 9 in the tooth width direction, the movement speed AF of the grinding wheel 20 in the tooth width direction becomes the minimum value AFmin only once. In this way, the load applied to the first movement mechanism 41 can be reduced as compared with a case where the movement speed AF of the grinding wheel 20 in the tooth width direction repeatedly increases and decreases.

In step S1, instead of the reference value AFo, the user may input a movement time T of the contact point C from one end to the other end of the workpiece 9 to the control unit 50. That is, in step S1, the user may input the movement time T and the change rate h to the control unit 50. In this case, the control unit 50 calculates the movement speed AF of the grinding wheel 20 in the tooth width direction based on the input change rate h and the movement time T. Specifically, the control unit 50 calculates the movement speed AF such that the time required to move the contact point C from one end to the other end of the workpiece 9 while changing the movement speed AF based on the input change rate h becomes the input movement time T. In this way, the workpiece 9 can be ground while changing the movement speed AF of the grinding wheel 20 and keeping the designated movement time T.

In step S5, the grinding wheel 20 may be moved in the shift direction by the second movement mechanism 42 while the grinding wheel 20 is moved in the tooth width direction by the first movement mechanism 41. In this way, the portion of the grinding wheel 20 in contact with the workpiece 9 can be dispersed. As a result, the life of the grinding wheel 20 can be extended. However, it is desirable that the movement speed SF of the grinding wheel 20 in the shift direction by the second movement mechanism 42 is sufficiently smaller than the movement speed AF of the grinding wheel 20 in the tooth width direction by the first movement mechanism 41.

The movement speed AF of the grinding wheel 20 in the tooth width direction by the first movement mechanism 41 is changed as described above, but the movement speed SF of the grinding wheel 20 in the shift direction by the second movement mechanism 42 does not need to be changed in accordance with the movement speed AF in the tooth width direction. Rather, the load on the second movement mechanism 42 can be reduced when the movement speed SF of the grinding wheel 20 in the shift direction is constant.

After the grinding wheel 20 is moved from one end to the other end of the workpiece 9 in the tooth width direction, the movement mechanism 40 separates the grinding wheel 20 from the workpiece 9. Then, the grinding wheel rotation mechanism 30 stops the rotation of the grinding wheel 20 (step S6), and the workpiece rotation mechanism 10 stops the rotation of the workpiece 9 (step S7). Thereafter, the workpiece 9 is taken out from the gear grinder 1 (step S8). When the workpiece 9 is automatically replaced by the loader and the next workpiece 9 is continuously ground, the above-described step S7 may be omitted and the rotation of the grinding wheel 20 may be continued.

<3. Example>

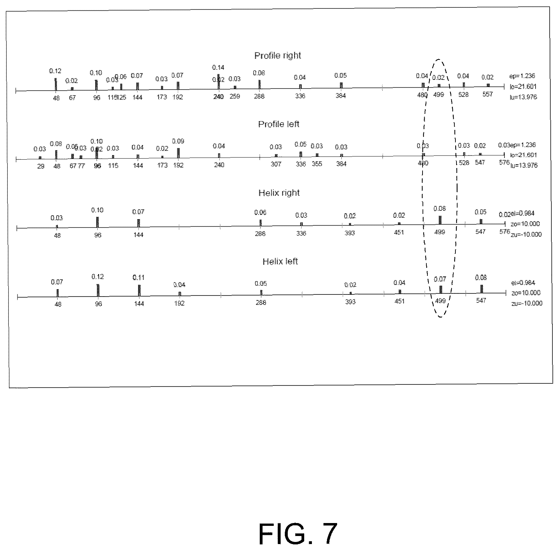

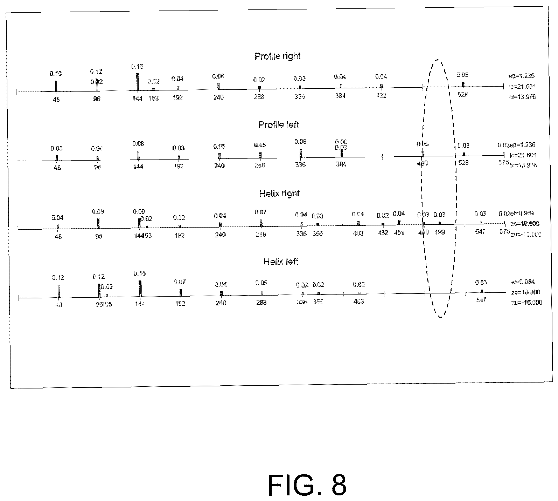

Fig. 7 is a graph (comparative example) illustrating a result of order analysis of minute undulations formed on a tooth surface of a gear manufactured by grinding the workpiece 9 while moving the grinding wheel 20 at a constant movement speed AF and measuring the shape of the tooth surface of the obtained gear. Fig. 8 is a graph (example) illustrating a result of order analysis of minute undulations formed on a tooth surface by producing a gear by grinding the workpiece 9 while changing the movement speed AF of the grinding wheel 20 as in Fig. 6 and measuring the shape of the tooth surface of the obtained gear. In the experiments of Figs. 7 and 8, the conditions other than the movement speed AF of the grinding wheel 20 are the same.

The horizontal axis of the graphs of Figs. 7 and 8 indicates the order of the undulation of the tooth surface. The vertical axis of the graphs of Figs. 7 and 8 indicates the magnitude of the undulation of the tooth surface. The order and magnitude of these undulation have a high correlation with the magnitude of noise when the gears are actually meshed.

In the experiments of Figs. 7 and 8, a gear having 48 teeth has been used. Therefore, it is considered normal that minute undulation having an order of an integral multiple of 48 is generated on the tooth surface. However, in the example of Fig. 7, as in a portion surrounded by a broken line, the undulation having an order of 499 that is not an integral multiple of 48 is generated on the tooth surface. The undulation of the order of 499 is considered to be caused by the feed mark caused by the movement speed AF of the grinding wheel 20. On the other hand, in the example of Fig. 8, the undulation having the order of 499 is hardly generated. From this result, as illustrated in Fig. 8, it has been confirmed that the undulation having the order that is not an integral multiple of the number of teeth can be reduced by changing the movement speed AF of the grinding wheel 20. Therefore, it can be seen that noise at the time of gear meshing can also be reduced by changing the movement speed AF of the grinding wheel 20.

<4. Modifications>

While the embodiments of the present invention have been described above, the present invention is not limited to the embodiments described above.

In the above embodiment, in step S5, the grinding wheel 20 moves from the upper end to the lower end of the workpiece 9. However, in step S5, the grinding wheel 20 may be moved from the lower end toward the upper end of the workpiece 9.

In the above embodiment, the movement speed AF of the grinding wheel 20 in the tooth width direction is changed in a sinusoidal shape. However, the movement speed AF of the grinding wheel 20 in the tooth width direction may be changed in another manner such as a quadratic curve or a step shape.

In the above embodiment, while the grinding wheel 20 moves once from one end to the other end of the workpiece 9 in the tooth width direction, the movement speed AF of the grinding wheel 20 in the tooth width direction becomes the minimum value AFmin only once. However, the movement speed AF of the grinding wheel 20 in the tooth width direction may become the minimum value AFmin a plurality of times while the grinding wheel 20 moves once from one end to the other end of the workpiece 9 in the tooth width direction.

Also note that features of the above-described embodiments and the modifications thereof may be combined appropriately as long as no conflict arises.

<5. Conclusions>

The present technology can have the following configurations.

(1) A gear grinder for grinding a workpiece serving as a gear, the gear grinder including: a workpiece rotation mechanism that rotates a workpiece having a plurality of teeth on an outer peripheral surface about a workpiece axis that is a central axis of the workpiece; a grinding wheel rotation mechanism that rotates a grinding wheel having threads on an outer peripheral surface about a grinding wheel axis which is a central axis of the grinding wheel; and a first movement mechanism that moves the grinding wheel from one end to the other end of the workpiece in a tooth width direction parallel to the workpiece axis, in which the workpiece rotation mechanism and the grinding wheel rotation mechanism synchronously rotate the workpiece and the grinding wheel in a state where the workpiece and the grinding wheel mesh with each other, and the first movement mechanism moves the grinding wheel to grind the workpiece, the workpiece includes: a first region located at a center portion in the tooth width direction; and a second region closer to an end portion in the tooth width direction than the first region, and a movement speed of the grinding wheel in the tooth width direction when grinding the first region is lower than a movement speed of the grinding wheel in the tooth width direction when grinding the second region.

(2) The gear grinder according to (1), in which the first movement mechanism gradually changes a movement speed of the grinding wheel in the tooth width direction between the first region and the second region.

(3) The gear grinder according to (2), in which the first movement mechanism changes a movement speed of the grinding wheel in the tooth width direction in a sinusoidal shape.

(4) The gear grinder according to any one of (1) to (3), in which a maximum value of a movement speed of the grinding wheel in the tooth width direction is more than 1 time and 20 times or less a minimum value of a movement speed of the grinding wheel in the tooth width direction.

(5) The gear grinder according to (4), in which the movement speed of the grinding wheel in the tooth width direction becomes the minimum value only once while the first movement mechanism moves the grinding wheel once from one end to the other end of the workpiece in the tooth width direction.

(6) The gear grinder according to any one of (1) to (5), further including a control unit that calculates a movement speed of the grinding wheel in the tooth width direction based on a change rate of a movement speed of the grinding wheel in the tooth width direction and a movement time of the grinding wheel in the tooth width direction.

(7) The gear grinder according to any one of (1) to (6), further including a second movement mechanism that moves the grinding wheel with respect to the workpiece in a shift direction parallel to the grinding wheel axis, in which the grinding wheel is moved at a constant speed in the shift direction by the second movement mechanism while moving the grinding wheel in the tooth width direction by the first movement mechanism.

(8) A gear grinding method for grinding a workpiece serving as a gear, the gear grinding method including: a step of grinding a workpiece by rotating a workpiece having a plurality of teeth on an outer peripheral surface thereof about a workpiece axis that is a central axis thereof, meshing a grinding wheel having threads on an outer peripheral surface thereof with the workpiece while rotating the grinding wheel about a grinding wheel axis which is a central axis thereof, and moving the grinding wheel from one end to an other end of the workpiece in a tooth width direction parallel to the workpiece axis, in which the workpiece includes: a first region located at a center portion in the tooth width direction; and a second region closer to an end portion in the tooth width direction than the first region, and a movement speed of the grinding wheel in the tooth width direction when grinding the first region is lower than a movement speed of the grinding wheel in the tooth width direction when grinding the second region.

(9) The gear grinding method according to (8), in which a movement speed of the grinding wheel in the tooth width direction is gradually changed between the first region and the second region.

(10) The gear grinding method according to (9), in which a movement speed of the grinding wheel in the tooth width direction is changed in a sinusoidal shape.

(11) The gear grinding method according to any one of (8) to (10), in which a maximum value of a movement speed of the grinding wheel in the tooth width direction is more than 1 time and 20 times or less a minimum value of a movement speed of the grinding wheel in the tooth width direction.

(12) The gear grinding method according to (11), in which a movement speed of the grinding wheel in the tooth width direction becomes the minimum value only once while the grinding wheel moves once from one end to the other end of the workpiece in the tooth width direction.

(13) The gear grinding method according to any one of (8) to (12), in which a movement speed of the grinding wheel in the tooth width direction is calculated based on a change rate of a movement speed of the grinding wheel in the tooth width direction and a movement time of the grinding wheel in the tooth width direction.

(14) The gear grinding method according to any one of (8) to (13), in which, in the step, the grinding wheel is moved at a constant speed in a shift direction parallel to the grinding wheel axis while the grinding wheel is moved in the tooth width direction.

Industrial Applicability

The present invention can be used for a gear grinder and a gear grinding method.

Reference Signs List

| 1 | gear grinder |
|---|---|
| 9 | workpiece |
| 10 | workpiece rotation mechanism |
| 20 | grinding wheel |
| 21 | thread |
| 30 | grinding wheel rotation mechanism |
| 40 | movement mechanism |
| 41 | first movement mechanism |
| 42 | second movement mechanism |
| 43 | third movement mechanism |
| 50 | control unit |
| 91 | teeth |
| A1 | first region |
| A2 | second region |
| AF | movement speed in tooth width direction |
| AFmax | maximum value |
| AFmin | minimum value |
| AFo | reference value |
| C | contact point |
| SF | movement speed in shift direction |
| T | movement time |
| X1 | workpiece axis |
| X2 | grinding wheel axis |
| h | change rate |

## Claims

1. A gear grinder (1) for grinding a workpiece (9) serving as a gear, the gear grinder (1) comprising:

   a workpiece rotation mechanism (10) that rotates a workpiece (9) having a plurality of teeth (91) on an outer peripheral surface about a workpiece axis (X1) that is a central axis of the workpiece (9);
   a grinding wheel rotation mechanism (30) that rotates a grinding wheel (20) having threads (21) on an outer peripheral surface about a grinding wheel axis which is a central axis of the grinding wheel (20); and
   a first movement mechanism (41) that moves the grinding wheel (20) from one end to an other end of the workpiece (9) in a tooth width direction parallel to the workpiece axis (X1), wherein
   the workpiece rotation mechanism (10) and the grinding wheel rotation mechanism (30) synchronously rotate the workpiece (9) and the grinding wheel (20) in a state where the workpiece (9) and the grinding wheel (20) mesh with each other, and the first movement mechanism (41) moves the grinding wheel (20) to grind the workpiece (9),
   the workpiece (9) includes:

   a first region (A1) located at a center portion in the tooth width direction; and
   a second region (A2) closer to an end portion in the tooth width direction than the first region (A1), and
   a movement speed (AF) of the grinding wheel (20) in the tooth width direction when grinding the first region (A1) is lower than a movement speed (AF) of the grinding wheel (20) in the tooth width direction when grinding the second region (A2).

2. The gear grinder (1) according to claim 1, wherein the first movement mechanism (41) gradually changes a movement speed (AF) of the grinding wheel (20) in the tooth width direction between the first region (A1) and the second region (A2).

3. The gear grinder (1) according to claim 2, wherein the first movement mechanism (41) changes a movement speed (AF) of the grinding wheel (20) in the tooth width direction in a sinusoidal shape.

4. The gear grinder (1) according to any one of claims 1 to 3, wherein a maximum value of a movement speed (AF) of the grinding wheel (20) in the tooth width direction is more than 1 time and 20 times or less a minimum value of a movement speed (AF) of the grinding wheel (20) in the tooth width direction.

5. The gear grinder (1) according to claim 4, wherein the movement speed (AF) of the grinding wheel (20) in the tooth width direction becomes the minimum value only once while the first movement mechanism (41) moves the grinding wheel (20) once from one end to an other end of the workpiece (9) in the tooth width direction.

6. The gear grinder (1) according to any one of claims 1 to 5, further comprising a control unit that calculates a movement speed (AF) of the grinding wheel (20) in the tooth width direction based on a change rate of a movement speed (AF) of the grinding wheel (20) in the tooth width direction and a movement time of the grinding wheel (20) in the tooth width direction.

7. The gear grinder (1) according to any one of claims 1 to 6, further comprising a second movement mechanism that moves the grinding wheel (20) with respect to the workpiece (9) in a shift direction parallel to the grinding wheel axis,
   wherein the grinding wheel (20) is moved at a constant speed in the shift direction by the second movement mechanism while moving the grinding wheel (20) in the tooth width direction by the first movement mechanism.

8. A gear grinding method for grinding a workpiece (9) serving as a gear, the gear grinding method comprising:

   a step of grinding a workpiece (9) by rotating a workpiece (9) having a plurality of teeth (91) on an outer peripheral surface thereof about a workpiece axis (X1) that is a central axis thereof, meshing a grinding wheel (20) having threads (21) on an outer peripheral surface thereof with the workpiece (9) while rotating the grinding wheel (20) about a grinding wheel axis which is a central axis thereof, and moving the grinding wheel (20) from one end to an other end of the workpiece (9) in a tooth width direction parallel to the workpiece axis (X1),
   wherein the workpiece (9) includes:

   a first region (A1) located at a center portion in the tooth width direction; and
   a second region (A2) closer to an end portion in the tooth width direction than the first region (A1), and
   a movement speed (AF) of the grinding wheel (20) in the tooth width direction when grinding the first region (A1) is lower than a movement speed (AF) of the grinding wheel (20) in the tooth width direction when grinding the second region (A2).

9. The gear grinding method according to claim 8, wherein a movement speed (AF) of the grinding wheel (20) in the tooth width direction is gradually changed between the first region (A1) and the second region (A2).

10. The gear grinding method according to claim 9, wherein a movement speed (AF) of the grinding wheel (20) in the tooth width direction is changed in a sinusoidal shape.

11. The gear grinding method according to any one of claims 8 to 10, wherein a maximum value of a movement speed (AF) of the grinding wheel (20) in the tooth width direction is more than 1 time and 20 times or less a minimum value of a movement speed (AF) of the grinding wheel (20) in the tooth width direction.

12. The gear grinding method according to claim 11, wherein a movement speed (AF) of the grinding wheel (20) in the tooth width direction becomes the minimum value only once while the grinding wheel (20) moves once from one end to an other end of the workpiece (9) in the tooth width direction.

13. The gear grinding method according to any one of claims 8 to 12, wherein a movement speed (AF) of the grinding wheel (20) in the tooth width direction is calculated based on a change rate of a movement speed (AF) of the grinding wheel (20) in the tooth width direction and a movement time of the grinding wheel (20) in the tooth width direction.

14. The gear grinding method according to any one of claims 8 to 13, wherein, in the step, the grinding wheel (20) is moved at a constant speed in a shift direction parallel to the grinding wheel axis while the grinding wheel (20) is moved in the tooth width direction.

FIG. 1

```
         ┌──────────────┐
         │    start     │
         └──────┬───────┘
                │
                ▼
         ┌──────────────┐
         │      S1      │
         └──────┬───────┘
                │
                ▼
         ┌──────────────┐
         │      S2      │
         └──────┬───────┘
                │
                ▼
         ┌──────────────┐
         │      S3      │
         └──────┬───────┘
                │
                ▼
         ┌──────────────┐
         │      S4      │
         └──────┬───────┘
                │
                ▼
         ┌──────────────┐
         │      S5      │
         └──────┬───────┘
                │
                ▼
         ┌──────────────┐
         │      S6      │
         └──────┬───────┘
                │
                ▼
         ┌──────────────┐
         │      S7      │
         └──────┬───────┘
                │
                ▼
         ┌──────────────┐
         │      S8      │
         └──────┬───────┘
                │
                ▼
         ┌──────────────┐
         │     end      │
         └──────────────┘
```

FIG. 2

FIG. 3

FIG. 4

FIG. 5

FIG. 6

FIG. 7

FIG. 8

Europäisches
Patentamt

European
Patent Office

Office européen
des brevets

**EUROPEAN SEARCH REPORT**

Application Number

EP 25 21 2041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 079557 A (AISHIN KK) 8 June 2023 (2023-06-08) * paragraphs [0016] - [0055]; figures 1-8 * ----- | 1,4-8, 11-14 | INV. B23F1/02 B23F5/04 |
| X | CN 114 555 270 A (KAPARIESIS LIMITE SINGLE COMPANY) 27 May 2022 (2022-05-27) * paragraphs [0035] - [0058], [0022]; figures 1, 2, 5 * ----- | 1-3,6, 8-10,13 | |

TECHNICAL FIELDS
SEARCHED (IPC)

B23F

The present search report has been drawn up for all claims

| Place of search | Date of completion of the search | Examiner |
|---|---|---|
| The Hague | 24 February 2026 | Lorence, Xavier |

EPO FORM 1503 03.82 (P04C01)

**ANNEX TO THE EUROPEAN SEARCH REPORT
ON EUROPEAN PATENT APPLICATION NO.**

EP 25 21 2041

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| JP 2023079557 | A | 08-06-2023 | NONE | | |
| CN 114555270 | A | 27-05-2022 | CN | 114555270 A | 27-05-2022 |
| | | | DE | 102019128100 A1 | 22-04-2021 |
| | | | EP | 4045217 A1 | 24-08-2022 |
| | | | US | 2024123570 A1 | 18-04-2024 |
| | | | WO | 2021074016 A1 | 22-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016083748 A